# EUROPÄISCHE PATENTSCHRIFT

(11) **EP 1 690 823 B1**
(45) Veröffentlichungstag und Bekanntmachung des Hinweises auf die Patenterteilung: **21.04.2010**
(21) Anmeldenummer: 06002758.8
(22) Anmeldetag: 10.02.2006
(51) Int. Cl.: B62B 3/06

(54) **Flurförderzeug**
Industrial truck
Chariot de manutention

(30) Priorität: 15.02.2005 DE 102005006854
(43) Veröffentlichungstag der Anmeldung: 16.08.2006
(73) Patentinhaber: OM Carrelli Elevatori S.p.A., 20020 Lainate (MI) (IT)
(72) Erfinder: Hoock, Michael, 22299 Hamburg (DE); Mariotti, Fabio, 42016 Guastalle (RE) (IT)
(74) Vertreter: Geirhos, Johann

(56) Entgegenhaltungen:
- EP-A2- 1 028 086
- EP-A2- 1 172 285
- CH-A5- 692 147
- DE-A1- 3 710 757
- DE-A1- 4 401 257
- DE-A1- 19 601 374
- DE-B- 1 126 102

## Beschreibung

Die Erfindung betrifft ein Flurförderzeug mit einem nicht anhebbaren Antriebsteil und mit einem am Antriebsteil vertikal geführten und anhebbaren Lastteil, welcher einen mit Lastrollen abgestützten Lastrahmen umfasst, wobei der Lastteil mittels einer Hubvorrichtung relativ zu dem Antriebsteil anhebbar ist und wobei die Hubvorrichtung eine Hebelanordnung und ein Gestänge aufweist mittels der ein in dem Antriebsteil angeordneten Teil der Hubvorrichtung mit den am Lastrahmen abgeordneten Lastrollen verbunden ist.

Gattungsgemäße Flurförderzeuge sind als Niederhubwagen, als Hochhubwagen oder als Kommissionierer bekannt. Diese Flurförderzeuge können als deichselgeführte Geräte, als Fahrerstandgeräte oder als Fahrersitzgeräte ausgeführt sein.

Bei gattungsgemäßen Flurförderzeugen kann der Lastrahmen des Lastteils mittels der Hubvorrichtung um ca. 10 bis 20 Zentimeter angehoben werden. Der Lastrahmen bildet lastseitig eine Lastgabel und weist antriebsteilseitig Anlenkpunkte für die Hubvorrichtung auf. Eine über der Lastgabel befindliche Last, beispielsweise eine Palette, kann durch Anheben des Lastrahmens mit angehoben und anschließend mit dem Flurförderzeug bewegt werden. Dies entspricht dem Aufbau eines üblichen Niederhubwagens oder Kommissionierers.

Zusätzlich kann bei gattungsgemäßen Flurförderzeugen mit Initialhubvorrichtung der Lastteil neben dem anhebbaren Lastrahmen zusätzlich ein Hubgerüst aufweisen, an dem eine Traggabel in vertikaler Richtung bewegbar geführt ist. Mittels der Traggabel können Lasten aufgenommen, transportiert und auf mehrere Meter Höhe angehoben werden, wodurch beispielsweise das Stapeln von Lasten und das Bedienen von Regalen ermöglicht wird.

Die Hubvorrichtung, mit der die zum Anheben des Lastteils erforderliche Kraft erzeugt wird, umfasst in der Regel mindestens einen hydraulischen Hubzylinder, zu dessen Versorgung eine von einem elektrischen Hubmotor angetriebene Hydraulikpumpe vorgesehen ist. Hubmotor und Hydraulikpumpe sind in der Regel im Antriebsteil des Hubwagens angeordnet. Gattungsgemäße Flurförderzeuge mit einem anhebbaren Lastrahmen weisen darüber hinaus eine Hebelanordnung und ein Gestänge auf, die den in dem Antriebsteil angeordneten Teil der Hubvorrichtung mit den am Lastrahmen angeordneten Lastrollen verbindet. Mit diesen ebenfalls zur Hubvorrichtung gehörenden Bauteilen wird die Hubbewegung des in dem Antnebstell angeordneten Hubzylinders derart auf die in dem Lastteil angeordneten Lastrollen übertragen, dass sich der vertikale Abstand der Lastrollen zu dem Lastrahmen synchron zu einer Längenänderung des Hubzylinders verändert.

Aus der DE 44 01 257 A1 ist ein gattungsgemäßes als Hubwagen ausgebildetes Flurförderzeug bekannt. Die Hubvorrichtung umfasst einen in dem Antriebsteil angeordneten Hydraulikzylinder, mittels dem der Lastrahmen anhebbar ist. An dem Lastrahmen ist eine von einem Umlenkhebel gebildete Hebelanordnung schwenkbar gelagert, die mittels eines Gestänges mit den Lastrollen in Verbindung steht. Der Umlenkhebel ist hierbei im wesentlichen horizontal angeordnet und steht mit einer Widenagerplatte in Wirkverbindung, die an der Unterseite eines horizontalen Rahmenabschnitts des Antriebsteils angeordnet ist. Eine derartige Anordnung des Umlenkhebels und des Widerlagers verursacht jedoch einen hohen Bauraumbedarf der Hubvorrichtung in Längsrichtung des Flurförderzeugs.

Die CH 692 147 A5, welche dem Oberbegriff des Unabhängigen Anspruchs 1 entspricht, zeigt ein als Hubwagen ausgebildetes Flurförderzeug, bei dem der Lastteil mittels einer von zwei vertikal beabstandeten Umlenkhebeln gebildeten Hebelanordnung an einem Antriebsteil mittels eines Hubzylinders anhebbar und absenkbar gelagert ist. Der untere Umlenkhebel steht mittels eines Gestänges mit den Lastrollen an dem Lastteil in Wirkverbindung. Der untere Umlenkhebel ist weiterhin in einem vertikal angeordneten Langloch des Antriebsteils geführt und steht mit einem weiteren Hydraulikzylinder in Wirkverbindung. Mit dem weiteren Hydraulikzylinder ist hierbei ein Rampenhub erzielbar, mit dem bei angehobenem Lastteil durch Einfahren des weiteren Hydraulikzylinders die Lastrollen in den Lastarmen des Lastteils abgesenkt werden können, um beim Befahren einer Rampe eine horizontale Ausrichtung des Lastteils zu erzielen. Der obere sowie der untere Umlenkhebel sind hierbei jeweils im wesentlichen horizontal angeordnet, wodurch die Umlenkhebel einen hohen Bauraumbedarf der Hubvorrichtung in Längsrichtung des Flurförderzeugs verursachen.

Der vorliegenden Erfindung liegt die Aufgabe zugrunde, ein Flurförderzeug der eingangs genannten Gattung zur Verfügung zu stellen, bei der die Hubvorrichtung einen geringen Bauraumbedarf aufweist.

Diese Aufgabe wird erfindungsgemäß dadurch gelöst, dass die Hebelanordnung als im wesentlichen vertikal angeordneter Umlenkhebel ausgebildet ist, der mit einer an einem vertikalen Rahmenabschnitt des Antriebsteils angeordneten Hubbahn in Wirkverbindung steht, wobei die Hubbahn als vertikal geneigte Fläche, insbesondere als in Richtung zum Lastrahmen vertikal geneigte Fläche, ausgebildet ist. Erfindungsgemäß ist am Rahmen des Antriebsteils eine Hubbahn angeordnet, mit der der Umlankhebel in Wirkverbindung steht, wodurch auf einfache Weise eine Schwenkbewegung des Umlenkhebels und somit eine Beaufschlagung des Gestänges zur Verstellung der Lastrollen erzielt werden kann. Die Hubbahn ist als vertikal geneigte Fläche, insbesondere als in Richtung zum Lastrahmen vertikal geneigte Fläche ausgebildet ist, wodurch beim Anheben bzw. Absenken des Lastrahmens relativ zum Antriebsteil durch eine von einer vertikal geneigten Fläche, die in Richtung zum Lastrahmen oder in Richtung zum Antriebsteil geneigt sein kann, ausgebildeten Hubbahn auf einfache Weise ein Verschwenken des Umlenkhebels und somit über das Gestänge eine synchrone Verstellung der Lastrollen erzielt werden. Hierdurch ist eine im wesentlichen vertikale Anordnung des mit der Hubbahn in Wirkverbindung stehenden Umlenkhebels erzielbar, wodurch sich ein geringer Bauraumbedarf der Hubvorrichtung in Längsrichtung des Flurförderzeugs. Die Hubbahn ist hierbei an dem vertikalen Rahmenabschnitt mit geringem Bauaufwand herstellbar und verursacht einen geringen Bauraumbedarf.

Der Umlenkhebel kann als einarmiger Hebel ausgebildet sein, der mittels eines . Schwenklagers am Lastrahmen schwenkbar gelagert ist, wobei am Hebelarm des Umlenkhebels das Gestänge schwenkbar gelagert ist. Der Hebelarm des als einarmigen Hebels ausgebildeten Umlenkhebels steht somit mit dem Gestänge und der Hubbahn in Wirkverbindung.

Mit besonderem Vorteil ist gemäß einer bevorzugten Ausführungsform der Erfindung der Umlenkhebel als zweiarmiger Hebel ausgebildet, der am Lastrahmen mittels eines Schwenklagers schwenkbar gelagert ist, wobei ein erster Hebelarm des Umlenkhebels mit der Hubbahn in Wirkverbindung steht und an einem zweiten Hebelarm des Umlenkhebels das Gestänge schwenkbar gelagert ist. Beim Anheben bzw. des Lastrahmens relativ zum feststehenden Antriebsteil kann hierdurch mit geringem Bauaufwand und Bauraumbedarf eine synchrone Änderung des vertikalen Abstands der Lastrollen zum Lastrahmen erzielt werden.

Ein hinsichtlich des Bauraumbedarfs günstige Anordnung ergibt sich hierbei, wenn gemäß einer Ausgestaltungsform der Erfindung der erste Hebelarm des Umlenkhebels oberhalb des Schwenklagers und der zweite Hebelarm des Umlenkhebels unterhalb des Schwenklagers angeordnet ist.

Zweckmäßigerweise ist an dem Umlenkhebel eine Laufrolle drehbar angeordnet ist, mittels der der Umlenkhebel mit der Hubbahn in Wirkverbindung steht.

Die synchrone Änderung des vertikalen Abstands der Lastrollen zum Lastrahmen kann auf einfache Weise erzielt werden, wenn gemäß einer bevorzugten Ausgestaltung der Erfindung das Gestänge als Stange, insbesondere Zugstange, ausgebildet ist, die in einer Schwinge schwenkbar gelagert ist, in der mindestens eine Lastrolle drehbar gelagert ist, wobei die Schwinge am Lastrahmen schwenkbar gelagert ist.

Sofern die Hubbahn gemäß einer bevorzugten Ausführungsform der Erfindung an einem Hubelement ausgebildet ist, das an dem vertikalen Rahmenabschnitt des Antriebsteil angeordnet ist, ergibt sich ein geringer Bauaufwand, da an dem Hubelement auf einfache Weise die Hubbahn hergestellt und das Hubelement auf einfache Weise an dem Antriebsteil angeordnet werden kann.

Gemäß einer vorteilhaften Weiterbildung der Erfindung ist das Hubelement an dem vertikalen Rahmenabschnitt verstellbar, insbesondere vertikal verstellbar, angeordnet. Durch eine vertikale oder horizontale Verstellung des Hubelements kann auf einfache Weise über den Umlenkhebel und das Gestänge die Position der Lastrollen eingestellt und verändert werden. Hierdurch ist es auf einfache Weise möglich, die Hubhöhe der Lastarme einzustellen und zu verändern und bei einem zwei Lastarme aufweisenden Lastrahmen die Position der Lastarme aneinander anzupassen.

Zur Verstellung des Hubelements ist hierbei zweckmäßigerweise ein Verstellmittel, insbesondere eine Einstellschraube, vorgesehen ist. Mittels einer Einstellschraube, die zwischen dem vertikalen Rahmenabschnitt des Antriebsteils und dem Hubelement angeordnet ist, kann bei guter Zugänglichkeit des Verstellmittels das Hubelement auf einfache Weise verstellt werden.

In bevorzugter Weiterbildung der Erfindung ist ein Federelement vorgesehen, mittels dem der Umlenkhebel in Richtung der Hubbahn beaufschlagt ist. Mit einem derartigen Federelement kann im Betrieb des Flurförderzeugs ein Anliegen der Laufrolle an der Hubbahn sichergestellt werden, wodurch Beschädigungen an der Laufrolle und der Hubbahn vermieden werden und Geräusche durch Schwingungen und Stöße zwischen der Hubbahn und der Laufrolle vermieden werden können.

Das Federelement kann an dem Umlenkhebel angeordnet sein und als Drehfeder ausgebildet werden.

Ein geringer Bauaufwand und eine platzsparende Anordnung des Federelements sind erzielbar, wenn das Federelement gemäß einer zweckmäßigen Ausführungsform als Feder, insbesondere Zugfeder, ausgebildet ist, die mit dem Lastrahmen und dem Gestänge in Wirkverbindung steht.

Besondere Vorteile ergeben sich bei einer Ausbildung des Flurförderzeugs als Kommissionierer mit einer dem vertikalen Rahmenabschnitt in Längsrichtung benachbart angeordneten Fahrerstandplattform. Bei einem als Kommissionierer ausgebildeten Flurförderzeug, bei dem eine Fahrerstandplattform an dem vertikalen Rahmenabschnitt gegenüberliegend zu dem Lastrahmen angeordnet ist, wird durch den geringen Bauraumbedarf der erfindungsgemäßen Hubvorrichtung in Längsrichtung des Flurförderzeugs eine verbesserte Erreichbarkeit der auf dem Lastrahmen angeordneten Last und somit eine verbesserte Ergonomie für die Bedienperson erzielt.

Weitere Vorteile und Einzelheiten der Erfindung werden anhand des in der schematischen Figur dargestellten Ausführungsbeispiels näher erläutert. Hierbei zeigt
- Figur 1: ein erfindungsgemäßes Flurförderzeug in einer perspektivischen Darstellung und
- Figur 2: einen Ausschnitt des Flurförderzeugs in einer Schnittdarstellung.

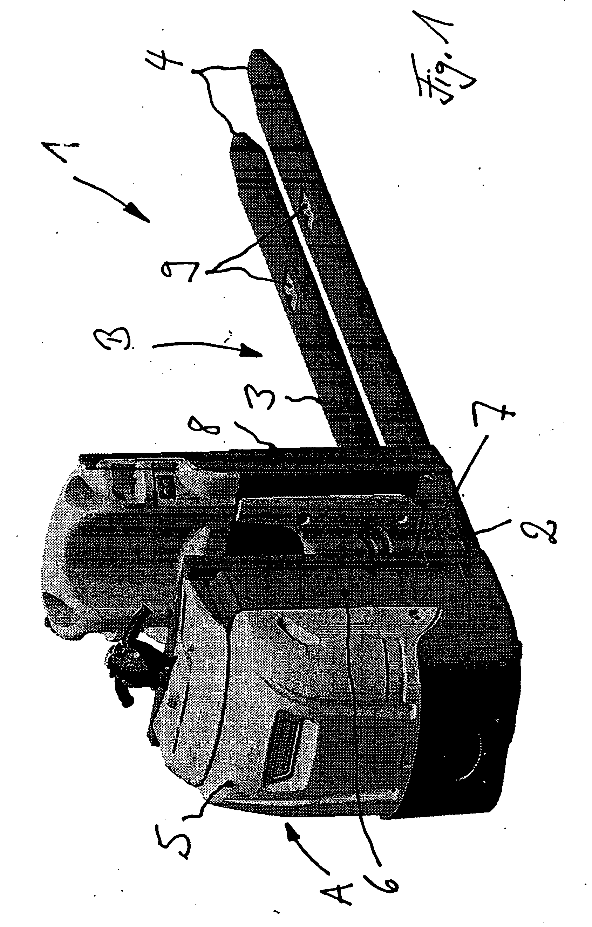

Die Figur 1 zeigt ein erfindungsgemäßes, als Kommissionierer 1 ausgebildetes Flurförderzeug. Der Kommissionierer 1 weist einen Antriebsteil A und einen anhebbaren bzw. absenkbaren Lastteil B auf, wobei als tragendes Bauteil des Antriebsteils A ein Rahmen 2 und als tragendes Bauteil des Lastteils B ein von zwei Lastarmen 4 gebildeter Lastrahmen 3 vorgesehen ist.

An dem vorderen Bereich des Antriebsteils A ist unter eine Haube 5 ein elektrischer Fahrantriebsmotor lenkbar an dem Rahmen 2 angeordnet. Unter der Haube 5 sind an dem Rahmen 2 weitere Aggregate angeordnet, beispielsweise eine Leistungselektronikeinheit und ein elektrischer Hubmotor zum Antrieb einer Hydraulikpumpe, mittels der eine Hubvorrichtung versorgbar ist.

In Längsrichtung des Flurförderzeugs benachbart zur Haube 5 ist am Rahmen 2 ein Batteriefach 6 zur Aufnahme eines Batterieblocks ausgebildet. In Längsrichtung des Kommissionierers 1 benachbart zum Batteriefach 6 ist eine Fahrerstandplattform 7 am Rahmen 2 angeordnet. Am hinteren Bereich des Rahmens 2 ist in Längsrichtung des Kommissionierers 1 benachbart zu der Fahrerstandplattform 7 ein vertikaler Rahmenabschnitt 8 angeordnet, in dem der anhebbare und absenkbare Lastrahmen 3 vertikal geführt ist. An den lastseitigen Enden der Lastarme 4 des Lastrahmens 3 sind Lastrollen 9 angeordnet, die den Lastteil B des Kommissionierers 1 auf der Fahrbahn abstützen.

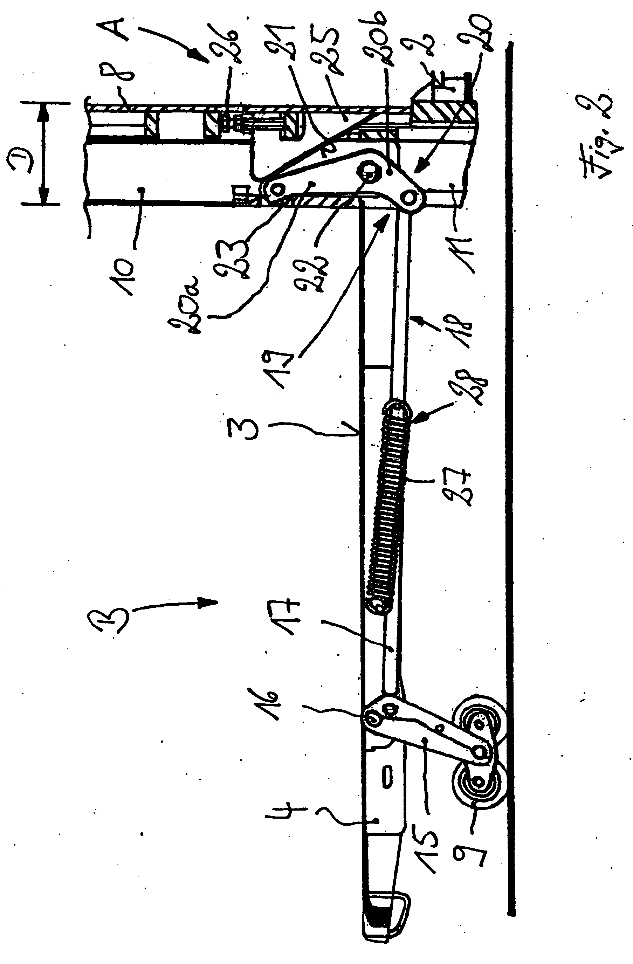

Der Lastrahmen 3 weist - wie in der Figur 2 gezeigt ist - horizontal angeordnete Lastarme 4 und einen vertikal angeordneten Lastschlitten 10 auf, der in Profilen 11 des vertikalen Rahmenabschnitts 8 des Rahmens 2 auf nicht mehr dargestellte Weise geführt ist. Die Hubvorrichtung umfasst zum Anheben und Absenken des Lastrahmens 3 relativ zum Rahmen 2 einen nicht mehr dargestellten Hydraulikzylinder, der mit dem Rahmen 2 und dem vertikalen Lastabschnitt 10 des Lastrahmens 3 auf nicht mehr dargestellte Weise in Wirkverbindung steht.

Die Hubvorrichtung umfasst weiterhin eine am lastseitigen Ende des Lastarmes 4 angeordnete Schwinge 15, in der mindestens eine Lastrolle 9 drehbar angeordnet ist.
Die Schwinge 15 ist mittels eines Schwenklagers 16 an dem Lastarm 4 schwenkbar gelagert. In der Schwinge 15 ist ein als Stange 17, beispielsweise als Zugstange, ausgebildetes Gestänge 18 der Hubvorrichtung schwenkbar gelagert, das am vorderen Ende an einer als Umlenkhebel 20 ausgebildeten Hebelanordnung 19 der Hubvorrichtung schwenkbar gelagert ist.

Erfindungsgemäß ist der Umlenkhebel 20 im wesentlichen vertikal angeordnet und steht mit einer an dem vertikalen Rahmenabschnitt 8 des Rahmens 2 des Antriebsteils A angeordneten Hubbahn 21 in Wirkverbindung.

Der Umlenkhebel 20 ist hierbei als zweiarmiger Hebel ausgebildet und am vorderen Bereich des Lastrahmens 3 mittels eines Schwenklagers 22 schwenkbar gelagert ist. An einem ersten im wesentlichen vertikal angeordneten Hebelarm 20a des Umlenkhebels 20 ist eine Laufrolle 23 drehbar angeordnet ist, mittels der der Umlenkhebel 20 mit der Hubbahn 21 in Wirkverbindung steht. Der erste Hebelarm 20a ist derart angeordnet, dass die Drehachse der Laufrolle 23 bei angehobenem und abgesenktem Lastrahmen 3 und somit über den gesamten Hub des Lastrahmens 3 vertikal oberhalb des Schwenklagers 22 angeordnet ist. An einem zweiten Hebelarm 20b des Umlenkhebels 20 ist das Gestänge 18 schwenkbar gelagert. Der zweite Hebelarm 20b ist hierbei derart ausgebildet, dass das Schwenklager des Gestänges 18 bei angehobenem und abgesenktem Lastrahmen 3 und somit über den Hub des Lastrahmens 3 vertikal unterhalb des Schwenklagers 22 angeordnet ist.

Die Hubbahn 21 ist als eine in Richtung zum Lastrahmen 3 vertikal geneigte Fläche ausgebildet und an einem Hubelement 25 ausgebildet, das an dem vertikalen Rahmenabschnitt 8 des Rahmens 2 befestigt ist. Das Hubelement 25 ist hierbei an dem vertikalen Rahmenabschnitt 8 vertikal verstellbar angeordnet. Zur vertikalen Verstellung des Hubelements 25 ist ein als Einstellschraube ausgebildetes Verstellmittel 26 vorgesehen.

In dem Lastarm 4 ist ein als Feder 27 ausgebildetes Federelement 28 angeordnet. Die als Zugfeder ausgebildete Feder 27 steht an einem Ende mit dem Lastarm 4 des Lastrahmens 3 und am anderen Ende mit der Stange 17 des Gestänges 16 in Verbindung und hält den Umlenkhebel 20 mit der Laufrolle 23 in Anlage an der Hubbahn 21.

Die zum Anheben des Lastrahmens 3 erforderliche Kraft wird mittels des hydraulischen Hubzylinders erzeugt, der den Lastschlitten 10 des Lastrahmens 3 relativ zum Rahmen 2 in den Profilen 11 des vertikalen Rahmenabschnitts 8 anhebt. Der Umlenkhebels 20, der hierbei mittels der Laufrolle 23 entlang der Hubbahn 21 des an dem vertikalen Rahmenabschnitts 8 befestigten Hubelements 25 läuft, wird hierbei um das Schwenklager 22 entgegen dem Uhrzeigersinn verschwenkt, wobei mittels der an dem Umlenkhebel 20 angeschlossenen Stange 17 des Gestänges 18 die Hubbewegung des Lastschlittens 10 auf die am lastseitigen Ende des Lastrahmens 3 gelagerte Schwinge 15 übertragen wird. Durch das Verschwenken der Schwinge 15 wird hierbei der vertikale Abstand der Lastrollen 9 zu dem Lastarm 4 synchron zu einer Längenänderung des Hubzylinders verändert.

In der Figur 2 ist hierbei der Lastrahmen im maximal angehoben Zustand dargestellt.

Mittels des als Einstellschraube ausgebildeten Verstellmittels 26, das in dem vertikalen Rahmenabschnitt 8 des Rahmens 2 leicht zugänglich angeordnet ist, kann hierbei durch die Veränderung der vertikale Position des Hubelements 25 die Hubhöhe, insbesondere bei abgesenktem Lastrahmen 3 der minimale Hub, der Lastarme 4 eingestellt und bei einem zwei Lastarme 4 aufweisenden Lastrahmen 3 die Position der beiden Lastarme 4 auf einfache Weise aneinander angepasst werden.

Die erfindungsgemäße Hubvorrichtung beansprucht hierbei in Längsrichtung des Flurförderzeugs einen geringen Bauraumbedarf, wodurch eine geringe Dicke D des vertikale Rahmenabschnitt 8 erzielbar ist, die bei einem als Kommissionierer ausgebildeten Flurförderzeug die Erreichbarkeit der auf dem Lastrahmen 3 angeordneten Last von der Fahrerstandplattform 7 verbessert.

## Patentansprüche

1. Flurförderzeug mit einem nicht anhebbaren Antriebsteil (A) und mit einem am Antriebsteil (A) vertikal geführten und anhebbaren Lastteil (B), welcher einen mit Lastrollen (9) abgestützten Lastrahmen (3) umfasst, wobei der Lastteil (B) mittels einer Hubvorrichtung relativ zu dem Antriebsteil (A) anhebbar ist und wobei die Hubvorrichtung eine Hebelanordnung (19) und ein Gestänge (18) aufweist mittels der ein in dem Antriebsteil (A) angeordneten Teil der Hubvorrichtung mit den am Lastrahmen (3) angeordneten Lastrollen (9) verbunden ist, **dadurch gekennzeichnet, dass** die Hebelanordnung (19) als im Wesentlichen vertikal angeordneter Umlenkhebel (20) ausgebildet ist, der mit einer an einem vertikalen Rahmenabschnitt (8) des Antriebsteils (A) angeordneten Hubbahn (21) in Wirkverbindung steht, wobei die Hubbahn (21) als vertikal geneigte Fläche, insbesondere als in Richtung zum Lastrahmen (3) vertikal geneigte Fläche, ausgebildet ist

2. Flurförderzeug nach Anspruch 1, **dadurch gekennzeichnet, dass** der Umlenkhebel (20) als einarmiger Hebel ausgebildet ist, der am Lastrahmen (3) mittels eines Schwenklagers (22) schwenkbar gelagert ist, wobei am Hebelarm (20a) des Umlenkhebels (20) das Gestänge (18) schwenkbar gelagert ist.

3. Flurförderzeug nach Anspruch 1, **dadurch gekennzeichnet, dass** der Umlenkhebel (20) als zweiarmiger Hebel ausgebildet ist, der am Lastrahmen (3) mittels eines Schwenklagers (22) schwenkbar gelagert ist, wobei ein erster Hebelarm (20a) des Umlenkhebels (20) mit der Hubbahn (21) in Wirkverbindung steht und an einem zweiten Hebelarm (20b) des Umlenkhebels (20) das Gestänge (18) schwenkbar gelagert ist.

4. Flurförderzeug nach Anspruch 3, **dadurch gekennzeichnet, dass** der erste Hebelarm (20a) des Umlenkhebels (20) oberhalb des Schwenklagers (22) und der zweite Hebelarm (20b) des Umlenkhebels (20) unterhalb des Schwenklagers (22) angeordnet ist.

5. Flurförderzeug nach einem der Ansprüche 1 bis 4, **dadurch gekennzeichnet, dass** an dem Umlenkhebel (20) eine Laufrolle (23) drehbar angeordnet ist, mittels der der Umlenkhebel (20) mit der Hubbahn (21) in Wirkverbindung steht.

6. Flurförderzeug nach einem der Ansprüche 1 bis 5, **dadurch gekennzeichnet, dass** das Gestange (18) als Stange (17), insbesondere Zugstange, ausgebildet ist, die in einer Schwinge (15) schwenkbar gelagert ist, in der mindestens eine Lastrolle (9a) drehbar gelagert ist, wobei die Schwinge (15) am Lastrahmen (3) schwenkbar gelagert ist.

7. Flurförderzeug nach einem der Ansprüche 1 bis 6, **dadurch gekennzeichnet, dass** die Hubbahn (21) an einem Hubelement (25) ausgebildet ist, das an dem vertikalen Rahmenabschnitt (8) des Antriebsteils (A) angeordnet ist.

8. Flurförderzeug nach Anspruch 7, **dadurch gekennzeichnet, dass** das Hubelement (25) an dem vertikalen Rahmenabschnitt (8) verstellbar, insbesondere vertikal verstellbar, angeordnet ist.

9. Flurförderzeug nach Anspruch 8, **dadurch gekennzeichnet, dass** zur Verstellung des Hubelements (25) ein Verstellmittel (26), insbesondere eine Einstellschraube, vorgesehen ist.

10. Flurförderzeug nach einem der Ansprüche 1 bis 9, **dadurch gekennzeichnet, dass** ein Federelement (28) vorgesehen ist, mittels dem der Umlenkhebel (20) in Richtung der Hubbahn (21) beaufschlagt.

11. Flurförderzeug nach Anspruch 10, **dadurch gekennzeichnet, dass** das Federelement (28) als Feder (27), insbesondere Zugfeder, ausgebildet ist, die mit dem Lastrahmen (3) und dem Gestänge (18) in Wirkverbindung steht.

12. Flurförderzeug nach einem der Ansprüche 1 bis 11 **gekennzeichnet durch** die Ausbildung als Kommissionierer (1) mit einer dem vertikalen Rahmenabschnitt (8) in Längsrichtung benachbart angeordneten Fahrerstandplattform (7).

## Claims

1. Industrial truck with a drive part (A) which cannot be raised and with a load part (B) which can be raised, is guided vertically on the drive part (A) and comprises a load frame (3) supported with load rollers (9), the load part (B) being capable of being raised relative to the drive part (A) by means of a lifting apparatus, and the lifting apparatus having a lever arrangement (19) and a rod assembly (18), by means of which part of the lifting apparatus, which part is arranged in the drive part (A), is connected to the load rollers (9), which are arranged on the load frame (3), **characterized in that** the lever arrangement (19) is in the form of a substantially vertically arranged deflecting lever (20), which is operatively connected to a lifting path (21) arranged on a vertical frame section (8) of the drive part (A), the lifting path (21) being in the form of a vertically sloping surface, in particular in the form of a surface which slopes vertically in the direction towards the load frame (3).

2. Industrial truck according to Claim 1, **characterized in that** the deflecting lever (20) is in the form of a one-armed lever, which is mounted pivotably on the load frame (3) by means of a pivot bearing (22), the rod assembly (18) being mounted pivotably on the lever arm (20a) of the deflecting lever (20).

3. Industrial truck according to Claim 1, **characterized in that** the deflecting lever (20) is in the form of a two-armed lever, which is mounted pivotably on the load frame (3) by means of a pivot bearing (22), a first lever arm (20a) of the deflecting lever (20) being operatively connected to the lifting path (21), and the rod assembly (18) being mounted pivotably on a second lever arm (20b) of the deflecting lever (20).

4. Industrial truck according to Claim 3, **characterized in that** the first lever arm (20a) of the deflecting lever (20) is arranged above the pivot bearing (22), and the second lever arm (20b) of the deflecting lever (20) is arranged below the pivot bearing (22).

5. Industrial truck according to one of Claims 1 to 4, **characterized in that** a running roller (23), by means of which the deflecting lever (20) is operatively connected to the lifting path (21), is arranged rotatably on the deflecting lever (20).

6. Industrial truck according to one of Claims 1 to 5, **characterized in that** the rod assembly (18) is in the form of a rod (17), in particular a tension rod, which is mounted pivotably in a rocker (15), in which at least one load roller (9a) is mounted rotatably, the rocker (15) being mounted pivotably on the load frame (3).

7. Industrial truck according to one of Claims 1 to 6, **characterized in that** the lifting path (21) is formed on a lifting element (25), which is arranged on the vertical frame section (8) of the drive part (A).

8. Industrial truck according to Claim 7, **characterized in that** the lifting element (25) is arranged adjustably, in particular vertically adjustably, on the vertical frame section (8).

9. Industrial truck according to Claim 8, **characterized in that**, in order to adjust the lifting element (25), an adjustment means (26), in particular an adjusting screw, is provided.

10. Industrial truck according to one of Claims 1 to 9, **characterized in that** a spring element (28) is provided, by means of which the deflecting lever (20) is acted upon in the direction of the lifting path (21).

11. Industrial truck according to Claim 10, **characterized in that** the spring element (28) is in the form of a spring (27), in particular a tension spring, which is operatively connected to the load frame (3) and to the rod assembly (18).

12. Industrial truck according to one of Claims 1 to 11, **characterized by** the design as an order picker (1) with a driver's standing platform (7) arranged adjacent to the vertical frame section (8) in the longitudinal direction.

## Revendications

1. Chariot de manutention comprenant une partie d'entraînement (A) ne pouvant pas être soulevée et une partie de charge (B) guidée verticalement sur la partie d'entraînement (A) et pouvant être soulevée, qui comprend un cadre de charge (3) supporté avec des rouleaux de charge (9), la partie de charge (B) pouvant être soulevée par rapport à la partie d'entraînement (A) au moyen d'un dispositif de levage et le dispositif de levage présentant un agencement de levier (19) et une tringlerie (18) au moyen de laquelle une partie du dispositif de levage disposée dans la partie d'entraînement (A) est connectée aux rouleaux de charge (9) disposés sur le cadre de charge (3), **caractérisé en ce que** l'agencement de levier (19) est réalisé sous forme de levier de déviation (20) disposé essentiellement verticalement, qui est en liaison fonctionnelle avec une piste de levage (21) disposée sur une portion de cadre verticale (8) de la partie d'entraînement (A), la piste de levage (21) étant réalisée sous forme de surface inclinée verticalement, notamment sous forme de surface inclinée verticalement dans la direction du cadre de charge (3).

2. Chariot de manutention selon la revendication 1, **caractérisé en ce que** le levier de déviation (20) est réalisé sous forme de levier à un bras qui est monté de manière pivotante sur le cadre de charge (3) au moyen d'un palier pivotant (22), la tringlerie (18) étant montée de manière pivotante sur le bras de levier (20a) du levier de déviation (20).

3. Chariot de manutention selon la revendication 1, **caractérisé en ce que** le levier de déviation (20) est réalisé sous forme de levier à deux bras, qui est monté sur le cadre de charge (3) de manière pivotante au moyen d'un palier pivotant (22), un premier bras de levier (20a) du levier de déviation (20) étant en liaison fonctionnelle avec la piste de levage (21) et la tringlerie (18) étant montée de manière pivotante sur un deuxième bras de levier (20b) du levier de déviation (20).

4. Chariot de manutention selon la revendication 3, **caractérisé en ce que** le premier bras de levier (20a) du levier de déviation (20) est disposé au-dessus du palier pivotant (22) et le deuxième bras de levier (20b) du levier de déviation (20) est disposé en dessous du palier pivotant (22).

5. Chariot de manutention selon l'une quelconque des revendications 1 à 4, **caractérisé en ce que** l'on dispose de manière rotative sur le levier de déviation (20) un rouleau de roulement (23) au moyen duquel le levier de déviation (20) est en liaison fonctionnelle avec la piste de levage (21).

6. Chariot de manutention selon l'une quelconque des revendications 1 à 5, **caractérisé en ce que** la tringlerie (18) est réalisée sous forme de barre (17), en particulier sous forme de barre de traction, qui est montée de manière pivotante dans une coulisse (15), dans laquelle au moins un rouleau de charge (9a) est monté de manière rotative, la coulisse (15) étant montée de manière pivotante sur le cadre de charge (3).

7. Chariot de manutention selon l'une quelconque des revendications 1 à 6, **caractérisé en ce que** la piste de levage (21) est réalisée sur un élément de levage (25), qui est disposé sur la portion de cadre verticale (8) de la partie d'entraînement (A).

8. Chariot de manutention selon la revendication 7, **caractérisé en ce que** l'élément de levage (25) est disposé de manière déplaçable sur la portion de cadre verticale (8), en particulier de manière déplaçable verticalement.

9. Chariot de manutention selon la revendication 8, **caractérisé en ce que** pour le déplacement de l'élément de levage (25), on prévoit un moyen de réglage (26), notamment une vis d'ajustement.

10. Chariot de manutention selon l'une quelconque des revendications 1 à 9, **caractérisé en ce qu'**un élément de ressort (28) est prévu, au moyen duquel le levier de déviation (20) est sollicité dans la direction de la piste de levage (21).

11. Chariot de manutention selon la revendication 10, **caractérisé en ce que** l'élément de ressort (28) est réalisé sous forme de ressort (27), en particulier de ressort de traction, qui est en liaison fonctionnelle avec le cadre de charge (3) et la tringlerie (18).

12. Chariot de manutention selon l'une quelconque des revendications 1 à 11, **caractérisé par** la réalisation sous forme de chariot de préparation des commandes (1) avec une plate-forme de station debout du conducteur (7) disposée dans la direction longitudinale à côté de la portion de cadre verticale (8).
